# EUROPÄISCHE PATENTSCHRIFT

(11) **EP 3 040 563 B1**
(45) Veröffentlichungstag und Bekanntmachung des Hinweises auf die Patenterteilung: **03.06.2020**
(21) Anmeldenummer: 15199631.1
(22) Anmeldetag: 11.12.2015
(51) Int. Cl.: F16B 25/00

(54) **SCHRAUBE MIT DISKONTINUITÄT AN ZWISCHENGEWINDEABSCHNITT**
SCREW WITH DISCONTINUITY AT THE SECTION BETWEEN THREADS
VIS AVEC UNE DISCONTINUITÉ SUR UNE SECTION DE FILETAGE INTERMÉDIAIRE

(30) Priorität: 05.01.2015 DE 102015100037
(43) Veröffentlichungstag der Anmeldung: 06.07.2016
(60) Teilanmeldung: 20170501.9
(73) Patentinhaber: Adolf Würth GmbH & Co. KG, 74653 Künzelsau (DE); Würth International AG, 7000 Chur (CH)
(72) Erfinder: Eckert, Rainer, 97990 Weikersheim (DE); Wunderlich, Andreas, 74635 Kupferzell (DE)
(74) Vertreter: Dilg, Haeusler, Schindelmann Patentanwaltsgesellschaft mbH

(56) Entgegenhaltungen:
- EP-A2- 1 892 425
- DE-A1- 3 615 271
- DE-C- 54 903
- DE-U1-202011 000 982
- GB-A- 2 042 120
- US-A1- 2009 245 972
- US-A1- 2013 336 744

## Beschreibung

Die Erfindung betrifft eine Schraube, ein Verfahren zum Einbringen einer Schraube in einen Untergrund, ein Verfahren zum Herstellen einer Schraube und eine Verwendung.

Eine Schraube ist ein Bolzen, der einen Antrieb aufweisen kann, wobei der Bolzen außen mit einem Gewinde versehen ist. Bei Schrauben mit Kopf dient die Ringfläche unter dem Kopf als Anschlag gegen das mit ihm zu befestigende Teil.

Aus EP 0,589,398 B1 bzw. DE 10 2010 028 344 A1 ist für einen Untergrund aus Kunststoff oder einem Leichtmetall bekannt, eine Schraube mit einem Gewinde in den Untergrund einzudrehen, wobei zwischen den Gewindegängen nichtzylindrische Kernabschnitte angeordnet sind, die sich in Richtung Schraubenkopf verjüngen. Dadurch soll das bei dem Eindrehen verdrängte Material des Untergrunds aus Kunststoff oder Leichtmetall längs jedes Kernabschnittes lediglich in eine rückseitige Richtung bis in den Kernabschnittsbereich kleinsten Durchmessers fließen, um nach einem in aller Regel zuvor durchgeführten Vorbohren ein verringertes Einschraubmoment der Schraube beim Eindrehen zu ermöglichen.

US 2007/0147973 A1 offenbart ein mit einem Gewinde versehenes Befestigungsmittel für Verbundwerkstoffe, welches einen Kopf und einen Schaft aufweist. Der Kopf ist an einem Ende des Schafts angebracht und der Schaft weist ferner an seinem anderen Ende eine Spitze auf. Ein Durchmesser des Schafts in dem unteren Gewindeabschnitt ist größer als ein Durchmesser des Schafts in einem oberen Gewindeabschnitt. Somit können, wenn das Befestigungsmittel innerhalb des Werkstücks rotiert wird, erzeugte Materialreste in dem oberen Gewindeabschnitt gesammelt werden.

US 6,669,424 B1 offenbart eine geschraubte Verbindung, welche ein erstes Verbindungsmittel mit einem Außengewinde und ein zweites Verbindungsmittel mit einem Innengewinde aufweist. Zur Vermeidung einer Selbstlockerung der geschraubten Verbindung weist das Außengewinde eine Verzahnung auf, welche mit einer zusammenpassenden Verzahnung des Innengewindes interagiert.

US 5,570,983 A offenbart eine reibungsreduzierte Schraube. Die Schraube benötigt zum Eindrehen in ein Werkstück weniger Drehmoment als eine konventionelle Schraube. Der Schaft der Schraube weist ein Gewinde mit reduzierter Dicke auf, welches weniger Gleitreibung produziert als eine konventionelle Schraube mit einem gleichbleibend tiefen Gewinde. Zum Verhindern eines Lösens der Schraube ist der Kopf an seiner Unterseite mit Vorsprüngen versehen, welche die Reibung zwischen Werkstück und Kopf erhöhen.

DE 81 03 990 U1 offenbart eine selbstfurchende Schraube mit mindestens zwei vorspringenden Gewindegänge bildenden gleich profilierten parallelen Wendeln, einem Flankenwinkel der vorspringenden Gewindegänge von weniger als 45°, einem großen Steigungswinkel und Einschnürungen am Gewindekern zwischen benachbarten Wendeln, deren engste Stelle etwa in der Mitte zwischen zwei benachbarten Gewindegängen liegt. Der Kern verjüngt sich ausgehend von den Fußenden benachbarter Gewindegänge. Die Schraube ist dadurch gekennzeichnet, dass der Steigungswinkel am Außendurchmesser der vorspringenden Gewindegänge zwischen 5° und 12° liegt. Ferner ist die Schraube dadurch gekennzeichnet, dass das Verhältnis zwischen Außendurchmesser und dem an der engsten Stelle der Einschnürung gemessenen Kerndurchmesser kleiner als 1,5 und größer als 1,2 ist.

DE 103 41 401 A1 offenbart eine Verbundeinrichtung für eine Holz-Beton-Verbindung. Die Holz-Beton-Verbindung umfasst eine Verbundschraube, die einen Schraubenschaft und einen Schraubenkopf aufweist. Der Schraubenschaft weist einen Holzeingriffabschnitt und einen Betoneinbettungsabschnitt auf. Der Betoneinbettungsabschnitt ist in Richtung der Längsachse der Verbundschraube benachbart zu dem Schraubenkopf angeordnet und der Holzeingriffabschnitt ist in Richtung der Längsachse der Verbundschraube entfernt zu dem Schraubenkopf angeordnet. Der Holzeingriffabschnitt ist mit einem Holzgewinde versehen. Der Betoneinbettungsabschnitt weist entlang der Verbundschraubenlängsachse im Wesentlichen über seiner gesamten Länge kontinuierliche oder diskrete Längsabstützzonen auf, welche sich im Wesentlichen oder vollständig in Richtung der Verbundschraubenlängsachse erstrecken.

DE 33 37 534 A1 offenbart eine selbstbohrende und/oder selbstformende Universalschraube mit einer im Schraubenkopf vorgesehenen Kupplung zur Übertragung des Drehmoments, einem Schaft und einer Bohrerspitze. Die Universalschraube ist dadurch gekennzeichnet, dass die Schraubenspitze einen Gewindegang mit gleichmäßigem Scheitelwinkel aufweist, und dass die Spitze in Umfangsrichtung durch aufeinander anschließende, diskontinuierliche, insbesondere konvexe und konkave Formabschnitte des Innenkreises des Querschnittes am spitzen Anfang bei null beginnt und mit zunehmendem Abstand von der Spitze bis zum Übergang in den Gewindegang zunimmt.

US 2009/0245972 A1 offenbart eine Schraube, Verfahren zum Einbringen einer Schraube und ein Verfahren zum Herstellen einer Schraube gemäß den Oberbegriffen der Ansprüche 1, 9 bzw. 11.

Für das Einbringen einer Schraube in einen Untergrund aus Kunststoff ist vorgesehen, in dem Kunststoffuntergrund ein Loch vorzubohren bzw. dieses beim Spritzen vorzusehen (Urformen) und nachfolgend eine Schraube in das Loch einzudrehen. Das Loch wird mit einem Durchmesser vorgebohrt, der größer als der Schaftdurchmesser der Schraube ist. Dabei können Abschnitte einer Schraube für einen Kunststoffuntergrund zwischen benachbarten Gewindegängen eine von einer Kreiszylindergeometrie abweichende Gestalt haben. Bei einer als RST bezeichneten Schraube der Firma Reyher zum Eindrehen in einen vorgebohrten Kunststoffuntergrund können Abschnitte der Schraube zwischen benachbarten Gewindegängen vom Schraubenkopf weg zum gegenüberliegenden Schraubenende hin verjüngend ausgebildet sein. Anschaulich schneiden sich die hohen Gewindegänge solcher Schrauben für Kunststoffuntergründe in das Kunststoffmaterial ein, das an das vorgebohrte Bohrloch angrenzt. Anders ausgedrückt beruht die Verankerungswirkung solcher Schrauben für Kunststoffuntergründe einzig auf der Verankerung der Gewindegänge in dem vorgebohrten Untergrund, wohingegen der Schraubenschaft in dem vorgebohrten Bohrloch im Wesentlichen frei liegt.

Gänzlich andere technische Prinzipien und physikalische Rahmenbedingungen als für Untergründe aus Kunststoff oder Leichtmetall gelten für das Einbringen einer Schraube in Holz. Beim Einbringen einer Schraube in Holz wird auf das Bilden einer Vorbohrung in der Regel verzichtet, vielmehr wird eine Holzschraube typischerweise in einen massiven Holzuntergrund vorbohrungsfrei eingedreht. Dabei schneidet sich das Gewinde einer Holzschraube in dem Holzuntergrund sein Gegengewinde selbst. Ein Beispiel für eine bekannte Holzschraube ist die von der Firma Würth vertriebene Schraube Assy Plus oder Assy 3.0. Ein Maß für die Güte der Verankerung einer Holzschraube in einem Holzuntergrund ist der Auszugswert. Damit wird die Zugkraft bezeichnet, die zum Herausziehen der Holzschraube aus dem Holzuntergrund, mithin zum Überwinden der Haltekraft der Holzschraube in dem Holzuntergrund, erforderlich ist.

Wenngleich die bekannte Holzschraube vom Typ Assy Plus bzw. Assy 3.0 bereits sehr gute Auszugswerte zeigt, wäre eine weiter verbesserte Auszugsfestigkeit einer Holzschraube dennoch wünschenswert. Eine solche Schraube soll natürlich hinsichtlich der Fertigbarkeit günstige Eigenschaften aufweisen.

Es ist eine Aufgabe der vorliegenden Erfindung, eine einfach herstellbare Schraube mit hoher Haltekraft bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Schraube bereitgestellt, die einen sich axial erstreckenden Schaftabschnitt und ein Gewinde an dem Schaftabschnitt aufweist, das ausgehend von dem Schaftabschnitt sich radial erstreckende Gewindegänge aufweist, wobei der Schaftabschnitt an einem Zwischengewindeabschnitt zwischen benachbarten Gewindegängen eine (insbesondere eine durchgehende Achsparallelität unterbrechende) Diskontinuität aufweist.

Gemäß einem weiteren Ausführungsbeispiel der vorliegenden Erfindung ist ein Verfahren zum Einbringen einer Schraube in einen Untergrund geschaffen, wobei bei dem Verfahren eine Schraubenspitze, insbesondere vorbohrungsfrei, an einem vorderseitigen Ende der Schraube an den Untergrund angesetzt wird, und die Schraube mittels Betätigens eines Schraubenkopfs an einem rückseitigen Ende der Schraube zum Ausüben einer Setzkraft auf die Schraube derart angetrieben wird, dass die Schraubenspitze in den Untergrund eindringt und ein Gewinde an einem sich axial erstreckenden Schaftabschnitt der Schraube zwischen Schraubenspitze und Schraubenkopf, insbesondere selbstschneidend, ein Gegengewinde in dem Untergrund schneidet, wobei an dem Schaftabschnitt zwischen benachbarten, ausgehend von dem Schaftabschnitt sich radial erstreckenden Gewindegängen eine (insbesondere eine von einer Achsparallelität abweichende) Diskontinuität ausgebildet ist, in deren Umgebungsbereich hinein beim axialen Eindringen der Schraube in den Untergrund Material des Untergrunds verdrängt wird.

Gemäß noch einem anderen Ausführungsbeispiel der vorliegenden Erfindung ist ein Verfahren zum Herstellen einer Schraube (insbesondere einer Holzschraube) zum (insbesondere vorbohrungsfreien) Einbringen in einen Untergrund (insbesondere einen Holzuntergrund) geschaffen, wobei bei dem Verfahren ein sich axial erstreckender Schaftabschnitt ausgebildet wird, ein Gewinde an dem Schaftabschnitt ausgebildet wird, das mit sich ausgehend von dem Schaftabschnitt radial erstreckenden Gewindegängen versehen wird, und eine (insbesondere von einer Achsparallelität abweichende) Diskontinuität an dem Schaftabschnitt an einem Zwischengewindeabschnitt zwischen benachbarten Gewindegängen ausgebildet wird.

Gemäß einem weiteren Ausführungsbeispiel der vorliegenden Erfindung wird eine Schraube mit den oben beschriebenen Merkmalen zum insbesondere vorbohrungsfreien Einbringen in einen Holzuntergrund verwendet.

Im Rahmen dieser Anmeldung wird unter dem Begriff "Diskontinuität" insbesondere ein Oberflächenstrukturmerkmal innerhalb des Zwischengewindeabschnitts verstanden, an welchem Oberflächenstrukturmerkmal sich (insbesondere in einer Querschnittsansicht entlang einer Ebene, welche die Schraubenachse enthält) die Steigung der Oberflächentrajektorie des Zwischengewindeabschnitts ändert, insbesondere abrupt oder unstetig (im Sinne einer fehlenden mathematischen Ableitbarkeit an dieser Stelle) ändert. Das Vorzeichen der Steigung (d.h. der ersten Ableitung) der Kurve der externen Oberfläche des Zwischengewindeabschnitts in axialer Richtung kann sich an der Stelle der Diskontinuität von Plus nach Minus, von Minus nach Plus, von Null nach Plus, von Null nach Minus oder von Null, Plus oder Minus nach unendlich ändern. Der Verlauf der Kurve an der Stelle der Diskontinuität kann eckig oder abgerundet erfolgen. Durch die Diskontinuität kann ein Aufnahmeraum zum Aufnehmen von mittels der Schraube verdrängtem Material des Untergrunds gebildet werden. Insbesondere wird unter einer Diskontinuität ein Verlauf verstanden, der weder eine durchgehende Achsparallelität mit konstantem Radius entlang des gesamten Zwischengewindeabschnitts noch eine Abschrägung kontinuierlicher Steigung entlang des gesamten Zwischengewindeabschnitts darstellt.

Gemäß einem Ausführungsbeispiel ist eine Schraube bereitgestellt, mit der eine hohe Haltekraft in einem Untergrund dadurch erreicht werden kann, dass sich nicht nur das Gewinde in dem Material des Untergrunds ein verankerndes Gegengewinde bildet, sondern zusätzlich auch zumindest ein durch die Diskontinuität abgegrenzter Teilabschnitt des Zwischengewindeabschnitts zwischen benachbarten Gewindegängen bei einem sukzessiven axialen Vortrieb der Schraube in radialer Richtung Material des Untergrunds verdrängt und dieses dadurch komprimiert. Neben großen Bereichen der Gewindeflanken wird auch zumindest ein Teilabschnitt des diskontinuierlich von einer durchgehenden Achsparallelität abweichenden Zwischengewindeabschnitts zwischen den Gewindegängen kraft- bzw. reibschlüssig gegen das Material des Untergrunds gepresst und erhöht somit die Verankerungskraft. Der durch das Einbringen des Gewindes in den Untergrund erzeugte Zwangsvorschub der Schraube in den Untergrund hinein führt aufgrund der nicht durchgehend uniradial achsparallel ausgebildeten Gewindezwischenabschnitte auch zu einer zusätzlichen Komponente der Verankerungskraft. Dadurch wird die Haltekraft der Schraube gegenüber herkömmlichen Schrauben verbessert bzw. werden die Auszugswerte erhöht. Ferner kann zudem ohne das Erfordernis des Hinzufügens weiteren Schraubenkernmaterials, anschaulich also durch bloßes Umlagern von Schraubenkernmaterial, vorzugsweise von vorne (d.h. von einem schraubenspitzenseitigen Bereich des Zwischengewindeabschnitts) nach hinten (d.h. zu einem schraubenkopfseitigen Bereich des Zwischengewindeabschnitts), die Haltekraft verbessert werden.

Schrauben gemäß exemplarischen Ausführungsbeispielen haben darüber hinaus noch einen weiteren signifikanten Vorteil: Beim Herstellen der Schraube (zum Beispiel mittels Walzens der Schraube) ist ein unerwünschtes Axialverschieben des Schraubenschafts dank der Diskontinuität vermieden, sodass die Schraube einfach und reproduzierbar herstellbar ist. Es hat sich gezeigt, dass beim Herstellen von Schrauben mit kontinuierlichem Zwischengewindeabschnitt, insbesondere wenn diese unter Bildung einer von Null abweichenden Steigung im Bereich des Zwischengewindeabschnitts abgeschrägt sind, derartige Schrauben eine Tendenz haben können, während des Walzvorgangs unerwünscht längsverschoben zu werden, was die Herstellbarkeit der Schraube mit reproduzierbaren Eigenschaften erschwert. Die Diskontinuität hemmt vorteilhaft diese Tendenz.

Gemäß einem Ausführungsbeispiel ist somit eine vorteilhaft als Holzschraube einsetzbare Schraube bereitgestellt, die insbesondere ohne die Notwendigkeit des Bildens eines Bohrlochs vor dem Einbringen in einen Holzuntergrund vorzugsweise selbstschneidend bzw. selbstbohrend in Letzterem verankert werden kann.

Im Weiteren werden zusätzliche exemplarische Ausführungsbeispiele der Schraube, der Verfahren und der Verwendung beschrieben.

Gemäß einem exemplarischen Ausführungsbeispiel kann die Diskontinuität an dem Zwischengewindeabschnitt als Stufe ausgebildet sein. Insbesondere kann eine solche Stufe durch zwei radial zueinander versetzte und sich im Wesentlichen entlang der gleichen Erstreckungsrichtung erstreckende Abschnitte gebildet sein, welche Abschnitte durch einen Verbindungsabschnitt mit einer anderen Erstreckungsrichtung verbunden werden. An den beiden Verbindungsstellen kann eine runder Übergang oder bevorzugt ein kantiger Übergang gebildet sein. Eine als Stufe ausgebildete Diskontinuität ist herstellungstechnisch einfach, erhöht in signifikanter Weise die Auszugskraft und unterdrückt bei der Herstellung mittels Walzens wirksam, den Schaftabschnitt in unerwünschter Weise längszuverschieben.

Gemäß einem exemplarischen Ausführungsbeispiel erstreckt sich die Diskontinuität in radialer Richtung weniger weit nach außen als die radial äußeren Enden des Gewindes. Dadurch wird sichergestellt, dass die Diskontinuität die Gewindefunktion nicht stört oder beeinflusst.

Gemäß einem exemplarischen Ausführungsbeispiel kann der Zwischengewindeabschnitt an der Stufe eine im Wesentlichen senkrecht zu einer Schraubenachse verlaufende Übergangsfläche aufweisen. Bei einer derart ausgeprägten Stufe ist die Tendenz zu einem unerwünschten Axialverschieben während des Walzens besonders wirksam vermieden, da die senkrechte Übergangsfläche auch als Verrutschschutz dient.

Gemäß einem exemplarischen Ausführungsbeispiel kann die Diskontinuität als Knickstelle, insbesondere als gegenüber dem Rest des Zwischengewindeabschnitts nach außen überstehende Kante, zwischen einem ersten Teilabschnitt des Zwischengewindeabschnitts und einem zweiten Teilabschnitt des Zwischengewindeabschnitts ausgebildet sein. Eine solche Knickstelle kann einen abrupten Übergang bewirken, der die Herstellbarkeit der Schraube vereinfacht. Gleichzeitig kann dadurch ein definierter Aufnahmeraum für Material des Untergrunds bereitgestellt werden. Der Übergang an der Schnittstelle kann rechtwinklig sein, oder auch spitz- oder stumpfwinklig.

Erfindungsgemäß ist einer des ersten Teilabschnitts und des zweiten Teilabschnitts als achsparalleler Abschnitt und der andere als gegenüber einer Schraubenachse abgeschrägter Abschnitt ausgebildet. Genau zwei Teilabschnitte sind in einem Zwischengewindeabschnitt bereitgestellt, wobei zwischen jeweils zwei benachbarten Teilabschnitten die Diskontinuität vorgesehen ist.

Gemäß einem exemplarischen Ausführungsbeispiel kann an dem Schaftabschnitt zwischen mehr als der Hälfte, bevorzugt zwischen mehr als 75 %, weiter bevorzugt zwischen mehr als 90 %, und höchst bevorzugt zwischen allen benachbarten Gewindegängen ein jeweiliger Zwischengewindeabschnitt mit einer jeweiligen Diskontinuität ausgebildet sein. Besonders bevorzugt können an dem Schaftabschnitt zwischen allen benachbarten Gewindegängen Diskontinuitäten ausgebildet sein. Alternativ kann nur ein Teilabschnitt des Schaftabschnitts mit Diskontinuitäten ausgestattet sein, wohingegen andere Zwischengewindeabschnitte einen kreiszylinderförmigen Schaftteilabschnitt aufweisen können oder einen sich in Richtung des Schraubenkopfs oder der Schraubenspitze verjüngenden Abschnitt. Zwischen dem schraubenkopfnächsten Gewindegang und dem Schraubenkopf kann ebenfalls eine Diskontinuität vorgesehen sein. Zwischen dem schraubenspitzennächsten Gewindegang und der Schraubenspitze kann ebenfalls eine Diskontinuität vorgesehen sein.

Gemäß einem exemplarischen Ausführungsbeispiel können die Zwischengewindeabschnitte mit der Diskontinuität gegenüber einer Schraubenachse derart abweichen, dass ein sich an einen jeweils hinterseitigen Gewindegang anschließendes Zusatzmaterial durch ein sich an den jeweils vorderseitigen Gewindegang anschließendes Fehlmaterial ausgeglichen ist. Anders ausgedrückt kann an einem verdickten Bereich auf einer Seite der Diskontinuität im Vergleich zu einem gedachten, entsprechenden kreiszylindrischen Schraubenkern genau die Materialmenge angelagert sein, die an einem verdünnten Bereich auf einer gegenüberliegenden anderen Seite der Diskontinuität gegenüber der Kreiszylindergeometrie eines massengleichen Schraubenkerns fehlt. In Summe kann damit die Masse eines Zwischengewindeabschnitts mit Diskontinuität der Masse eines entsprechenden, von einer Diskontinuität freien und durchgehend achsparallelen Zwischengewindeabschnitts gleichen. Dies ist vorteilhaft, da sich die Zwischengewindeabschnitte mit Diskontinuität folglich durch eine reine Materialumlagerung (insbesondere mittels Walzens) ausgehend von einem Rohling und somit mit geringerem Aufwand hergestellt werden können als dies bei einem Zusatzmaterial applizierenden Verfahren oder bei einem materialabtragenden Verfahren der Fall wäre.

Gemäß einem exemplarischen Ausführungsbeispiel kann die Schraube als Holzschraube zum, insbesondere vorbohrungsfreien, Einbringen in einen Holzuntergrund, insbesondere in einen massiven Holzuntergrund ausgebildet sein. Die Geometrie der Schraube ist besonders gut dafür geeignet, verdrängtes Holzmaterial eines Holzuntergrunds aufzunehmen. Indem in einen Holzuntergrund die Schraube auch vorbohrungsfrei einbringbar ist, ist eine einfache Montage ermöglicht. Vorzugsweise ist dann das Gewinde auch als selbstschneidendes Gewinde ausgebildet.

Gemäß einem exemplarischen Ausführungsbeispiel kann die Schraube ferner einen an den Schaftabschnitt rückseitig direkt oder indirekt angeschlossenen Schraubenkopf und/oder eine an den Schaftabschnitt vorderseitig direkt oder indirekt angeschlossene Schraubenspitze zum Eindringen in den Untergrund aufweisen. Zwischen Schraubenkopf und Schaftabschnitt kann also optional auch ein gewindefreier Abschnitt vorgesehen sein, insbesondere wenn ein Holzbauteil auf einem anderen Holzbauteil montiert werden soll. Für andere Anwendungen (zum Beispiel Montage eines Metallbauteils auf einem Holzbauteil) kann ein Vollgewinde ohne gewindefreien Abschnitt zwischen Schraubenkopf und Schaftabschnitt eingesetzt werden.

Gemäß einem exemplarischen Ausführungsbeispiel kann ein Flankenwinkel von zumindest einem Teil der Gewindegänge in einem Bereich zwischen ungefähr 30° und ungefähr 70°, insbesondere in einem Bereich zwischen ungefähr 40° und ungefähr 60°, liegen. Derartige Flankenwinkel sind zum Erreichen einer besonders guten Haltekraft vorteilhaft, da dann die Gewindeflanken effizient an das Holz angreifen können.

Gemäß einem exemplarischen Ausführungsbeispiel kann die Schraubenspitze auf ein im Wesentlichen punktförmiges Ende der Schraube zulaufen. Gemäß einem anderen exemplarischen Ausführungsbeispiel kann die Schraubenspitze mindestens eine endseitige Schneidkante aufweisen. Hinsichtlich der Ausgestaltung der Schraubenspitze gibt es somit unterschiedliche Möglichkeiten, wobei die Schraubenspitze vorteilhaft so konfiguriert sein kann, dass die Schraube ohne Vorbohrung in einen massiven Holzuntergrund eingedreht werden kann.

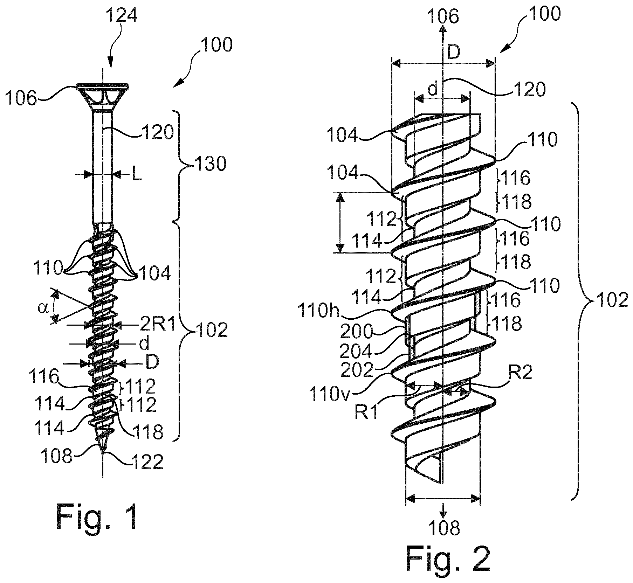

Gemäß einer ersten Ausgestaltung kann die Schraubenspitze als ein punktförmiges Ende der Schraube gebildet sein, wobei sich das Gewinde direkt ausgehend von dem punktförmigen Ende entlang des Schaftabschnitts erstrecken kann. Eine solche Ausgestaltung ist in Figur 1 gezeigt. Wenn der Gewindeansatz direkt an dem punktförmigen Ende beginnt, kann bei Ansetzen des punktförmigen Endes auf die (insbesondere nicht vorgebohrte) Oberfläche eines Holzuntergrunds das Gewinde unmittelbar greifen und mit dem selbstfurchenden bzw. selbstschneidenden Eindringen in den Untergrund beginnen. Mit dieser Ausgestaltung der Schraubenspitze ist ein Vorbohren entbehrlich und ein kraftarmes Einbringen ermöglichst, da der Zwangsvorschub des Gewindes einen Monteur gleich von Beginn des Setzvorgangs an unterstützt.

Gemäß einer alternativen zweiten Ausgestaltung kann die Schraubenspitze als Bohrspitze mit mindestens einer endseitigen Schneidkante ausgebildet sein. Eine solche, zum Beispiel lineare scharfe Schneidkante kann als mindestens eine Hauptschneide ausgebildet sein und wie bei einem Bohrer ein Loch in einem hölzernen Untergrund generieren. Optional kann auch noch mindestens eine Querschneide an der Bohrspitze vorgesehen sein, wie den Fachleuten auf dem Gebiet der Schrauben und Bohrer bekannt.

Gemäß einem exemplarischen Ausführungsbeispiel kann der Schraubenkopf mit einem Antrieb zum Drehantreiben der Schraube versehen sein. Ein solcher Antrieb dient zum formschlüssigen Kontakt mit einem Werkzeug zum Eindrehen der Schraube, wie zum Beispiel ein muskelbetriebener Schraubendreher oder ein motorbetriebenes Setzgerät (zum Beispiel ein Akkuschrauber). Ein rückseitiges Ende der Schraube kann somit durch den Schraubenkopf mit einem Antrieb zum Drehantreiben der Schraube gebildet sein. Der Antrieb kann als Längsschlitz, als Kreuzschlitz, als Imbus, als TORX-Antrieb oder als AW-Antrieb ausgebildet werden.

Gemäß einem exemplarischen Ausführungsbeispiel kann die Diskontinuität von beiden, den zugehörigen Zwischengewindeabschnitt axial begrenzenden Gewindegängen axial beabstandet sein, insbesondere axial in der Mitte zwischen beiden, den zugehörigen Zwischengewindeabschnitt axial begrenzenden Gewindegängen angeordnet sein. Darüber hinaus kann an beiden axialen Grenzen zwischen Zwischengewindeabschnitt und den beiden begrenzenden Gewindegängen jeweils ein abgerundeter oder kantiger Übergang vorgesehen sein, der einen Übergang zwischen Zwischengewindeabschnitt und Gewindegang darstellt.

Gemäß einem exemplarischen Ausführungsbeispiel kann die Diskontinuität um eine Schraubenachse vollumfänglich umlaufen, insbesondere parallel zu den Gewindegängen helikal um die Schraubenachse umlaufen. Somit kann die Diskontinuität, die dann für mehrere oder alle Zwischengewindeabschnitte als zusammenhängende Struktur ausgebildet sein kann, parallel zu Windungen der Gewindegänge verlaufen. Dies erlaubt eine einfache Herstellbarkeit und vermeidet radiale Anfangs- und Endstellen.

Gemäß einem exemplarischen Ausführungsbeispiel kann die Schraube mittels Drehbetätigens eines Antriebs an dem Schraubenkopf angetrieben werden. Zum Beispiel kann ein muskelkraftbetriebener Schraubendreher oder ein motorkraftbetriebenes Schraubgerät eingesetzt werden, um die Schraube drehend in den Untergrund einzubringen. Ein Zwangsvorschub der Schraube in dem Untergrund wird dabei durch das selbstschneidende Gewinde der Schraube bewirkt, was das axiale Eindringen der Schraube in den Untergrund kraftarm ermöglicht.

Gemäß einem anderen exemplarischen Ausführungsbeispiel kann die Schraube mittels Ausübens einer rein oder vorwiegend axialen Setzkraft auf den Schraubenkopf angetrieben werden, insbesondere eingenagelt oder eingeschossen werden. Aufgrund der relativ niedrigen Gewindehöhe einer Schraube gemäß einem exemplarischen Ausführungsbeispiel ist auch ein drehfreies Einbringen der Schraube in einen vorgebohrten oder nicht vorgebohrten Untergrund möglich, zum Beispiel mittels eines entsprechend konfigurierten Bolzenschubwerkzeugs.

Gemäß einem Ausführungsbeispiel kann die Schraube mittels Kaltmassivumformen (zum Ausbilden von Kopf bzw. Antrieb), Kneifen (zum Ausbilden der Schraubenspitze) und Walzen (zum Bilden des Gewindes) ausgebildet werden.

Gemäß einem exemplarischen Ausführungsbeispiel kann die zumindest eine Diskontinuität zumindest teilweise beim Walzen des Gewindes ausgebildet werden. Dabei erfolgt lediglich eine für das Ausbilden der durch die Diskontinuität getrennten Abschnitte eines jeweiligen Zwischengewindeabschnitts ausreichende Materialumlagerung, so dass das Aufbringen oder Entfernen von Material zum Ausbilden des mindestens einen Zwischengewindeabschnitts mit mindestens einer Diskontinuität entbehrlich ist.

Gemäß einem exemplarischen Ausführungsbeispiel kann der mindestens eine Zwischengewindeabschnitt mit Diskontinuität zumindest teilweise beim Kneifen der Schraubenspitze ausgebildet werden. Auch gemäß dieser Ausgestaltung können Diskontinuitäten hergestellt werden, ohne dass hierfür ein separater Arbeitsgang erforderlich ist.

Schrauben gemäß exemplarischen Ausführungsbeispielen der Erfindung können mit symmetrischem oder asymmetrischem Gewinde ausgebildet werden. Bei einem asymmetrischen Gewinde ist die ansteigende Flanke mit einem anderen Anstiegswinkel versehen als die abfallende Flanke, wohingegen bei einem symmetrischen Gewinde der Winkel der ansteigenden Flanke und jener der abfallenden Flanke gleich sind. Erfindungsgemäße Schrauben (insbesondere Holzschrauben) können selbstschneidend bzw. selbstfurchend in einem Untergrund (insbesondere einem Holzuntergrund) ausgebildet sein. Als Schraubenspitze für Schrauben gemäß exemplarischen Ausführungsbeispielen können eine selbstbohrende bzw. selbstschneidende Spitze eingesetzt werden, die gekniffen oder gewalzt werden kann. Schrauben gemäß exemplarischen Ausführungsbeispielen können zum Beispiel aus Edelstahl (rostfrei), Kohlenstoffstahl, etc. hergestellt werden. Die Schraube kann beschichtet (zum Beispiel gewachst) oder verzinkt werden oder erst verzinkt und dann gewachst werden, um die Gleiteigenschaften der Schraube in einem Untergrund weiter zu verbessern.

Im Folgenden werden exemplarische Ausführungsbeispiele der vorliegenden Erfindung und nicht zur Erfindung gehörende Vergleichsbeispiele mit Verweis auf die folgenden Figuren detailliert beschrieben.
Figur 1 zeigt eine Holzschraube gemäß einem Vergleichsbeispiel mit einer punktförmigen Schraubenspitze und mit eine Diskontinuität aufweisenden Zwischengewindeabschnitten.
Figur 2 zeigt eine vergrößerte Darstellung eines Teils des Schaftabschnitts samt Gewinde der Holzschraube gemäß Figur 1.
Figur 3 bis Figur 5 zeigen jeweils schematisch eine Ausgestaltung eines Zwischengewindeabschnitts einer Schraube gemäß Vergleichsbeispielen.
Figur 6 zeigt schematisch eine Ausgestaltung eines Zwischengewindeabschnitts einer Schraube gemäß einem exemplarischen Ausführungsbeispiel der Erfindung.
Figur 7 zeigt schematisch eine Ausgestaltung eines Zwischengewindeabschnitts einer Schraube gemäß einem Vergleichsbeispiel.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung und Vergleichsbeispiele beschrieben werden, sollen noch einige allgemeine Aspekte der Erfindung erläutert werden:
Gemäß einem Vergleichsbeispiel ist eine Schraube bereitgestellt, die ein Gewinde mit als Stufe ausgeformtem Gewindegrund aufweist.

Ausgangspunkt der Überlegungen der vorliegenden Erfinder war eine Holzschraube mit einem kreiszylindrischen Kern. Die vorliegenden Erfinder stellten jedoch fest, dass eine solche herkömmliche Schraube hinsichtlich der Auszugswerte (d.h. des von der Schraube gebotenen Widerstands gegen Herausziehen aus dem Holzuntergrund) und des Bruchdrehmoments (d.h. eines auf den Schraubenkopf ausgeübten Drehmoments bei gleichzeitigen Einspannen des Schaftabschnitts, bei welchem Drehmoment eine unerwünschte Abtrennung im Bereich des Gewindeübergangs erfolgt) noch Verbesserungspotenzial aufwies.

Bei Holzschrauben soll die Flankenfläche, die zum Kopf der Schraube zeigt, besonders hochgeformt sein. Deshalb hat die Inhaberin des vorliegenden Patentes auch nichtachsparallele Gewindekerne entwickelt, bei denen der Gewindekern nichtachspararallel zur gedachten Mittelachse der Schaube ist (Schräge, Radius an einer Seite). Obwohl derartige Schrauben hervorragende Auszugseigenschaften haben, führt die beschriebene Ausgestaltung der Gewindekerne aber dazu, dass beim Herstellen der Schraube durch Umformwalzen die Schrägen, die in der Walzbacke als Negativ vorhanden sind, die Schraube leicht axial nach oben schieben. Durch die Verschiebung kommt es vor, dass andere zu formende Konturen, die sich in der Walzbacke und auch auf der Schraube befinden, sich nicht wieder finden und diese dadurch nur teilweise oder überhaupt nicht ausgeformt sind. Zwar ist eine solche Schraube leistungsfähig, erfordert während der Herstellung aber Maßnahmen, die das axiale Verschieben der Schraube während des Herstellens unterdrücken.

Indem gemäß einem Vergleichsbeispiel mindestens zwei von mindestens einer Diskontinuität getrennte achsparallele Abschnitte des Gewindes vorgesehen werden, kommt es vorteilhaft nicht zur axialen Verschiebung der Walzrohlinge, was den Herstellungsprozess signifikant vereinfacht. Gleichzeitig können mit einer solchen Schraube hohe Auszugswerte erreicht werden.

Eine solche Schraube ist besonders gut geeignet als Holzschraube (das heißt als Schraube zum Einbringen in einen Holzuntergrund, insbesondere in einen massiven Holzuntergrund) und kann besonders vorteilhaft mit einem in Holz selbstschneidenden Gewinde ausgestattet werden.

Gemäß einem exemplarischen Ausführungsbeispiel ist eine vorzugsweise aus Metall hergestellte Schraube, vorzugsweise für Holzanwendungen, bereitgestellt, wobei der Kern der Holzschraube nicht durchweg parallel zur Schraubenachse geformt wird, sondern stattdessen durch eine strukturelle Diskontinuität in Abschnitte mit unterschiedlichen Radialausdehnungen aufgeteilt wird. Dies führt zu hohen Auszugswerten. Durch die beschriebene Maßnahme entsteht auch eine höhere tragende Gewindeflanke bei gleichem

Außendurchmesser der Holzschraube, sowie ein ausgeprägter radialer Druck. Die höhere Gewindeflanke und die Zwischengewindeabschnitte mit Diskontinuität können für Druck oder Zug eingesetzt werden, je nachdem in welche Richtung diese wirken. Durch den Schraubenkern mit hin zur Schraubenspitze gestuft zulaufenden Zwischengewindeabschnitten kann ein hohes Bruchdrehmoment erreicht werden.

**Figur 1** zeigt eine Seitenansicht einer aus Stahl gebildeten, oberflächlich gewachsten Holzschraube 100 gemäß einem Vergleichsbeispiel mit einem Schaftabschnitt 102 mit Gewinde 104 zwischen einer punktförmigen Schraubenspitze 108 und einem Schraubenkopf 106. Der Schaftabschnitt 102 hat mit einer helikal oder schraubenförmig umlaufenden Diskontinuität 114 versehene Zwischengewindeabschnitte 112. Eine zentrale Längsachse oder Schraubenachse ist mit Bezugszeichen 120 gezeigt. **Figur 2** zeigt eine vergrößerte Darstellung eines Teilbereichs des Schaftabschnitts 102 samt Gewinde 104 der Holzschraube 100 gemäß Figur 1.

Die in Figur 1 gezeigte Holzschraube 100 ist so ausgestaltet, dass diese ohne die Notwendigkeit, vor dem Eindrehen der Holzschraube 100 in einen massiven Holzuntergrund (nicht gezeigt) eine Vorbohrung in dem Holzuntergrund zu erstellen (d.h. vorbohrungsfrei), in einen massiven Holzuntergrund eingedreht werden kann. Gemäß exemplarischen Ausführungsbeispielen der Erfindung ist es aus den unten näher beschriebenen Gründen in der Regel sogar erwünscht, auf eine Vorbohrung zu verzichten, da dies zu besonders guten Auszugswerten der eingedrehten Holzschraube 100 führt. Die besonders gute Haltekraft der Holzschraube 100 in einem massiven Holzuntergrund beruht nicht nur auf einem Formschluss zwischen dem selbstschneidenden Gewinde 104 der Holzschraube 100 einerseits und einem in den massiven Holzuntergrund selbstgeschnittenen Gegengewinde, sondern darüber hinaus auf einer Verdrängung und Verdichtung von Holzmaterial durch die sich zur Schraubenspitze 108 hin stufig radial zulaufenden Abschnitte bzw. Zwischengewindeabschnitte 112, die während des Setzvorgangs und im gesetzten Zustand der Holzschraube 100 gegen das verdrängte und komprimierte Holzmaterial allseitig und vollumfänglich um die Holzschraube 100 reibschlüssig drücken.

An einer Rückseite des zentralen Schaftabschnitts 102 mit dem in Holz selbstschneidenden Gewinde 104 schließt sich in dem Vergleichsbeispiel gemäß Figur 1, beabstandet durch einen optionalen gewindefreien Abschnitt 130, der Schraubenkopf 106 mit einem Antrieb 124 an. Der Antrieb 124 ist so ausgebildet, dass ein Drehwerkzeug (nicht gezeigt) in den Antrieb 124 formschlüssig eingreifen kann und mittels Beaufschlagens der Holzschraube 100 mit einem Drehmoment diese vorbohrungsfrei in den massiven Holzuntergrund eindrehen kann. An einer Vorderseite - bezogen auf eine Setzrichtung der Holzschraube 100 - des Schaftabschnitts 102 mündet dessen Gewinde 104 unmittelbar in der an das Gewinde 104 direkt angeschlossenen punktförmigen Schraubenspitze 108, wodurch die vorbohrungsfreie Eindrehbarkeit der Holzschraube 100 in den massiven Holzuntergrund bewirkt bzw. gefördert wird. Genauer gesagt beginnt das Gewinde 104 in unmittelbarer Nähe der Schraubenspitze 108, die hier als punktförmiges Ende 122 der Holzschraube 100 ausgebildet ist. Anders ausgedrückt geht das Gewinde 104 des Schaftabschnitts 102 nahtlos in die Schraubenspitze 108 über. Dadurch kann erreicht werden, dass durch das bloße Aufsetzen der punktförmigen Spitze 122 auf den massiven Holzuntergrund und mittels Ausübens mäßigen Drucks und eines Drehmoments auf den Antrieb 124 die punktförmige Spitze 122 drehend auf den Holzuntergrund gedrückt oder gepresst wird, was dann zu einem Eindrehen der Holzschraube 100 und zu einem Selbstschneiden des Gegengewindes in dem Holzuntergrund führt.

Der Schaftabschnitt 102 erstreckt sich axial (und im Wesentlichen rotationssymmetrisch) entlang der Schraubenachse 120. Das Gewinde 104, das an dem Schaftabschnitt 102 außenseitig angeformt ist, weist ausgehend von dem Schaftabschnitt 102 sich radial erstreckende und helikal umlaufende Gewindegänge 110 auf, welche den radial äußersten Bereich des Schaftabschnitts 102 bilden. An einem jeweiligen Zwischengewindeabschnitt 112, d.h. einem jeweiligen axialen Abschnitt der Schraube 100 zwischen einem jeweils benachbarten Paar von Gewindegängen 110, ist als gezielte mechanische Störstruktur eine Diskontinuität 114 vorgesehen. Mit anderen Worten ist im Bereich der Diskontinuität 114 an dem Zwischengewindeabschnitt 112 ein Formmerkmal gebildet, an welchem die Erstreckungsrichtung der äußeren Oberfläche der Schraube 100 sich nicht parallel zu der Schraubenachse 120 erstreckt. Die Diskontinuität 114 an dem Zwischengewindeabschnitt 112 ist gemäß Figur 1 als Stufe ausgebildet, die zwischen zwei achsparallelen Abschnitten 116, 118 des Zwischengewindeabschnitts 112 mit unterschiedlichen Radien, die in Figur 2 als R1 und R2 bezeichnet sind, ausgebildet. Dabei gilt gemäß Figur 2: R1>R2. Der Zwischengewindeabschnitt 112 weist an der Stufe eine im Wesentlichen senkrecht zu der Schraubenachse 120 verlaufende Übergangsfläche auf.

Wie in Figur 1 und Figur 2 gezeigt, ist die Diskontinuität 114 von beiden, den zugehörigen Zwischengewindeabschnitt 112 axial begrenzenden Gewindegängen 110 axial beabstandet. Die Diskontinuität 114 ist somit räumlich getrennt von dem jeweils stufigen Übergang zwischen einem hinterseitigen Gewindegang 110h und dem achsparalielen Abschnitt 116 einerseits und zwischen einem vorderseitigen Gewindegang 110v und dem anderen achsparallelen Abschnitt 118 andererseits vorgesehen. Die Diskontinuität 114 läuft um die Schraubenachse 120 in mehreren Windungen um, und zwar in spiralförmiger Weise parallel zu den Gewindegängen 110 helikal um die Schraubenachse 120 herum.

Der achsparallele Abschnitt 116 mit dem größeren Radius R1 ist dabei schraubenkopfseitig angeordnet, d.h. ist dem Schraubenkopf 106 näher als der achsparallele Abschnitt 118 mit dem kleineren Radius R2. Entsprechend ist der achsparallele Abschnitt 118 mit dem kleineren Radius R2 schraubenspitzenseitig angeordnet, das heißt der Schraubenspitze 108 näher als der achsparallele Abschnitt 116 mit dem größeren Radius R1. Der achsparallele Abschnitt 116 mit dem größeren Radius R1 weist einen Durchmesser von ungefähr 75 % eines Außendurchmessers D des Gewindes 104 auf. Ferner ist 2R1 ungefähr gleich dem Durchmesser L des gewindefreien Abschnitts 130. Der achsparallele Abschnitt 118 mit dem kleineren Radius R2 hat einen Durchmesser von ungefähr 50 % des Außendurchmessers D des Gewindes 104. Ein kleinster Durchmesser der Holzschraube 100 ist der Durchmesser des Gewindekerns des Gewindes 104 und ist mit d bezeichnet, wobei d=2R2 gilt. Ein Flankenwinkel α der Gewindegänge beträgt 50°

Figur 2 zeigt am Vergleichsbeispiel eines stufigen Zwischengewindeabschnitts 112, dass dessen Diskontinuität 114 derart ausgebildet ist, dass ein sich an einen hinterseitigen Gewindegang 110h anschließendes Zusatzmaterial 200 durch ein sich an einen vorderseitigen Gewindegang 110v anschließendes Fehlmaterial 202 gerade ausgeglichen ist. Somit ist der Zwischengewindeabschnitt 112 gegenüber der Schraubenachse 120 derart teils nach innen, teils nach außen achsparallel versetzt, dass der Zwischengewindeabschnitt 112 einen hypothetischen bzw. virtuellen massenäquivalenten Kreiszylinderkern in der Mitte (siehe Mittelpunkt 204) zwischen dem hinterseitigen Gewindegang 110h und dem vorderseitigen Gewindegang 110v schneidet. Dies zeigt, dass bei Holzschrauben 100 gemäß Vergleichsbeispielen die abgestuften Zwischengewindeabschnitte 112 bloß durch Materialumformung bzw.
- umiagerung von einem vorderen Schraubenbereich zu einem hinteren Schraubenbereich gebildet werden. Diese Materialumformung bzw. -umlagerung kann zum Beispiel während des normalen Herstellungsprozesses der Holzschraube 100 mittels Walzens erfolgen. Damit ist ein aufwändiger zusätzlicher Materialauftrag genauso vermieden wie ein aufwändiger Materialentfernungsprozess. Vielmehr können ohne zusätzlichen Arbeitsgang die nach vorne hin stufenweise schmäler werdenden Abschnitte 116, 118 der Zwischengewindeabschnitte 112 während des normalen Herstellungsprozesses der Holzschraube 100 und somit ohne zusätzlichen Zeitaufwand erfolgen.

Die mit der Diskontinuität 114 versehenen Zwischengewindeabschnitte 112 können während des Walzens des Gewindes 104, mithin mit einem äußerst geringen Zusatzaufwand, ausgebildet werden.

Mit der in Figur 1 und Figur 2 gezeigten Schraube 100 kann die erhaltene Auszugskraft vorteilhaft deutlich erhöht werden:
Im Weiteren werden experimentelle Ergebnisse beschrieben, die aus einem Vergleich einer Holzschraube 100 mit Zwischengewindeabschnitten 112 mit Diskontinuität 114 gemäß Vergleichsbeispielen und einer herkömmlichen Holzschraube mit einem kreiszylindrischen Schraubenkern erhalten wurden. Bei beiden miteinander verglichenen Schrauben handelt es sich um mittels LaserCUSING® hergestellte Schrauben.

In **Tabelle 1** sind Eindrehmomente der herkömmlichen Holzschraube und der Holzschraube 100 gemäß einem Vergleichsbeispiel in einen Fichtenholzuntergrund gegenübergestellt. In beiden Fällen handelt es sich um Holzschrauben mit den Dimensionen 6mm x 80mm. Die Werte der Tabelle 1 sind indikativ für die Kraft, die zum vorbohrungsfreien Eindrehen der jeweiligen Schraube in den Fichtenuntergrund erforderlich ist. Die Ergebnisse wurden bei einer Einschraubtiefe von 50 mm unter Einsatz eines Akkuschraubers (Stufe 1) erhalten. Die Holzschraube 100 weist ein kleineres Eindrehmoment gegenüber der herkömmlichen Holzschraube auf.

**Tabelle 1: Eindrehmomente**

| | Herkömmliche Schraube | Holzschraube 100 |
|---|---|---|
| Versuch 1 | 3,23 | 2,78 |
| Versuch 2 | 2,8 | 3,01 |
| Versuch 3 | 3,09 | 2,83 |
| Mittelwert | 3,04 | 2,9 |

In der folgenden **Tabelle 2** sind Auszugskräfte der herkömmlichen Holzschraube und der Holzschraube 100 gemäß dem Vergleichsbeispiel aus dem Fichtenholzuntergrund gegenübergestellt,

**Tabelle 2: Auszugskräfte**

| | Herkömmliche Schraube | Holzschraube 100 |
|---|---|---|
| Versuch 1 | 5,7 | 5,55 |
| Versuch 2 | 5,4 | 6,06 |
| Versuch 3 | 5,19 | 5,89 |
| Mittelwert | 5,43 | 5,83 |

Die Messergebnisse zeigen, dass mit der Holzschraube 100 deutlich bessere Auszugswerte erreicht werden konnten als mit der herkömmlichen Holzschraube.

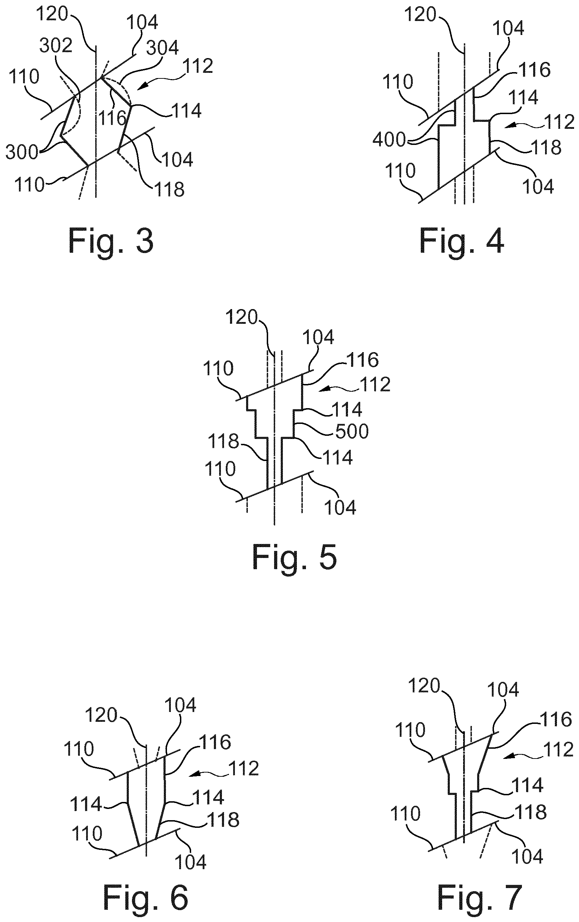

**Figur 3** zeigt eine alternative Ausgestaltung eines Zwischengewindeabschnitts 112 einer Schraube 100 gemäß einem anderen Vergleichsbeispiel.

Gemäß Figur 3 sind der erste Teilabschnitt 116 und der zweite Teilabschnitt 118 jeweils als gegenüber der Schraubenachse 120 abgeschrägter Abschnitt 300 ausgebildet. Die Flanken des ersten Teilabschnitts 116 laufen konisch in Richtung des Schraubenkopfs 106 zu. Die Flanken des zweiten Teilabschnitts 118 laufen konisch in Richtung der Schraubenspitze 108 zu. An der Stelle, an der die beiden Teilabschnitte 116, 116 zusammenlaufen, ist eine Diskontinuität 114 in Form einer Kante gebildet. In Figur 3 ist gestrichelt eingezeichnet, dass ein beliebiger der Teilabschnitte 116, 118 zumindest abschnittsweise konkav (siehe Bezugszeichen 302) und/oder zumindest abschnittsweise konvex (siehe Bezugszeichen 304) geformt sein kann.

**Figur 4** zeigt eine alternative Ausgestaltung eines Zwischengewindeabschnitts 112 einer Schraube 100 gemäß einem anderen Vergleichsbeispiel.

Das Vergleichsbeispielgemäß Figur 4 unterscheidet sich von jenem gemäß Figur 1 und Figur 2 dadurch, dass gemäß Figur 4 nun der erste Teilabschnitt 116 einen kleineren Radius hat als der zweite Teilabschnitt 118. Beide Teilabschnitte 116, 118 sind als jeweils achsparalleler Abschnitt ausgebildet, an deren Übergangsbereich eine Diskontinuität 114 in Form einer rechtwinkligen Stufe gebildet ist.

**Figur 5** zeigt eine alternative Ausgestaltung eines Zwischengewindeabschnitts 112 einer Schraube 100 gemäß einem anderen VergleichsbeispielVergleichsbeispiel.

Das Vergleichsbeispielgemäß Figur 5 hat einen Zwischengewindeabschnitt 112, der aus drei Teilabschnitten 116, 118, 500 gebildet ist, zwischen denen zwei Diskontinuitäten 114 vorgesehen sind. Die drei Teilabschnitte 116, 118, 100 und gemäß Figur 4 alle achsparallel, allerdings können diese alternativ auch andere Formen haben (zum Beispiel konisch, konvex oder konkav).

**Figur 6** zeigt eine alternative Ausgestaltung eines Zwischengewindeabschnitts 112 einer Schraube 100 gemäß einem exemplarischen Ausführungsbeispiel der Erfindung.

Das Ausführungsbeispiel gemäß Figur 6 unterscheidet sich von dem Ausführungsbeispiel gemäß Figur 3 dadurch, dass der erste Teilabschnitt 116 achsparallel ist. Der zweite Teilabschnitt 118 ist hingegen sowohl gemäß Figur 3 als auch gemäß Figur 6 nicht achsparallel.

**Figur 7** zeigt eine alternative Ausgestaltung eines Zwischengewindeabschnitts 112 einer Schraube 100 gemäß einem anderen Vergleichsbeispiel.

Das Vergleichsbeispiel gemäß Figur 7 unterscheidet sich von dem Vergleichsbeispiel gemäß Figur 5 dadurch, dass der erste Teilabschnitt 116 konisch ist. Gemäß Figur 7 ist der erste Teilabschnitt 116 konisch (und somit nicht achsparallel), der zweite Teilabschnitt 118 achsparallel sowie ein zwischen dem ersten Teilabschnitt 116 und dem zweiten Teilabschnitt 118 angeordneter Zwischenabschnitt achsparallel mit einem gegenüber dem zweiten Teilabschnitt 118 größeren Radius.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Vergleichsbeispiele beschrieben worden sind, auch in Kombination mit anderen Merkmalen oder Schritten anderer oben beschriebener Ausführungsbeispiele und Vergleichsbeispiele verwendet werden können. Bezugszeichen in den Ansprüchen sind nicht als Einschränkung anzusehen.

## Patentansprüche

1. Schraube (100), aufweisend:
einen sich axial erstreckenden Schaftabschnitt (102);
ein Gewinde (104) an dem Schaftabschnitt (102), das ausgehend von dem Schaftabschnitt (102) sich radial erstreckende Gewindegänge (110) aufweist;
wobei der Schaftabschnitt (102) an einem Zwischengewindeabschnitt (112) zwischen benachbarten Gewindegängen (110) eine Diskontinuität (114) aufweist;
wobei genau zwei Teilabschnitte (116, 118) in dem Zwischengewindeabschnitt (112) bereitgestellt sind und die Diskontinuität (114) zwischen den beiden Teilabschnitten (116, 118) vorgesehen ist,
**dadurch gekennzeichnet, dass**
einer des ersten Teilabschnittes (116) und des zweiten Teilabschnittes (118) ein gegenüber einer Schraubenachse abgeschrägter Abschnitt ist **und der andere von dem ersten Teilabschnitt (116) und dem zweiten Teilabschnitt (118) ein gegenüber der Schraubenachse achsparalleler Abschnitt ist.**

2. Schraube (100) gemäß Anspruch 1, wobei die Diskontinuität (114) an dem Zwischengewindeabschnitt (112) als Stufe ausgebildet ist.

3. Schraube (100) gemäß einem der Ansprüche 1 und 2, wobei der Zwischengewindeabschnitt (112) an der Stufe eine im Wesentlichen senkrecht zu einer Schraubenachse (120) verlaufende Übergangsfläche aufweist.

4. Schraube (100) gemäß einem der Ansprüche 1 bis 3, aufweisend zumindest eines der folgenden Merkmale:
wobei an dem Schaftabschnitt (102) zwischen mehr als der Hälfte, bevorzugt zwischen mehr als 75 %, weiter bevorzugt zwischen mehr als 90 %, und höchst bevorzugt zwischen allen benachbarten Gewindegängen (110) ein jeweiliger Zwischengewindeabschnitt (112) mit einer jeweiligen Diskontinuität (114) ausgebildet ist;
wobei die Zwischengewindeabschnitte (112) mit der Diskontinuität (114) gegenüber einer Schraubenachse (120) derart abweichen, dass ein sich an einen jeweils hinterseitigen Gewindegang (110h) anschließendes Zusatzmaterial (200) durch ein sich an den jeweils vorderseitigen Gewindegang (110v) anschließendes Fehlmaterial (202) ausgeglichen ist;
wobei die Zwischengewindeabschnitte (112) mit der Diskontinuität (114) gegenüber einer Schraubenachse (120) derart abweichen, dass die Diskontinuität (114) an dem jeweiligen Zwischengewindeabschnitt (112) einen massenäquivalenten Kreiszylinderkern in der Mitte zwischen einem jeweiligen hinterseitigen Gewindegang (110h) und einem jeweiligen vorderseitigen Gewindegang (110v) schneidet.

5. Schraube (100) gemäß einem der Ansprüche 1 bis 4, ausgebildet als Holzschraube (100) zum, insbesondere vorbohrungsfreien, Einbringen in einen Holzuntergrund, insbesondere in einen massiven Holzuntergrund.

6. Schraube (100) gemäß einem der Ansprüche 1 bis 5, ferner aufweisend:
einen an den Schaftabschnitt (102) rückseitig direkt oder indirekt angeschlossenen Schraubenkopf (106); und/oder
die an den Schaftabschnitt (102) vorderseitig direkt oder indirekt angeschlossene Schraubenspitze (108) zum Eindringen in den Untergrund.

7. Schraube (100) gemäß Anspruch 6, aufweisend zumindest eines der folgenden Merkmale:
wobei die Schraubenspitze (108) als ein punktförmiges Ende (122) gebildet ist, wobei sich das Gewinde (104) ausgehend von dem punktförmigen Ende (122) entlang zumindest eines Teils des Schaftabschnitts (102) erstreckt;
wobei die Schraubenspitze (108) als Bohrspitze, insbesondere mit mindestens einer endseitigen Schneidkante, ausgebildet ist;
wobei der Schraubenkopf (106) mit einem Antrieb (124) zum Drehantreiben der Schraube (100) versehen ist, wobei der Antrieb (124) insbesondere als Längsschlitz, als Kreuzschlitz, als Imbus, als TORX-Antrieb oder als AW-Antrieb ausgebildet ist.

8. Schraube (100) gemäß einem der Ansprüche 1 bis 7, aufweisend zumindest eines der folgenden Merkmale:
wobei die Diskontinuität (114) von beiden, den zugehörigen Zwischengewindeabschnitt (112) axial begrenzenden Gewindegängen (110) axial beabstandet ist, insbesondere axial in der Mitte zwischen beiden, den zugehörigen Zwischengewindeabschnitt (112) axial begrenzenden Gewindegängen (110) angeordnet ist;
wobei die Diskontinuität (114) um eine Schraubenachse (120) vollumfänglich umläuft, insbesondere parallel zu den Gewindegängen (110) helikal um die Schraubenachse (120) umläuft.

9. Verfahren zum Einbringen einer Schraube (100) in einen Untergrund, wobei das Verfahren aufweist:
Ansetzen, insbesondere vorbohrungsfreies Ansetzen, einer Schraubenspitze (108) an einem vorderseitigen Ende der Schraube (100) an den Untergrund;
Antreiben der Schraube (100) mittels Betätigens eines Schraubenkopfs (106) an einem rückseitigen Ende der Schraube (100) zum Ausüben einer Setzkraft auf die Schraube (100) derart, dass die Schraubenspitze (108) in den Untergrund eindringt und ein Gewinde (104) an einem sich axial erstreckenden Schaftabschnitt (102) der Schraube (100) zwischen Schraubenspitze (108) und Schraubenkopf (106), insbesondere selbstschneidend, ein Gegengewinde in dem Untergrund schneidet, wobei an dem Schaftabschnitt (102) zwischen benachbarten, ausgehend von dem Schaftabschnitt (102) sich radial erstreckenden Gewindegängen (110) ein Gewindezwischenabschnitt (112) mit einer Diskontinuität (114) ausgebildet ist, in deren Umgebungsbereich hinein beim axialen Eindringen der Schraube (100) in den Untergrund Material verdrängt wird;
wobei genau zwei Teilabschnitte (116, 118) in dem Gewindezwischenabschnitt (112) bereitgestellt sind und die Diskontinuität (114) zwischen den beiden Teilabschnitten (116, 118) vorgesehen ist,
**dadurch gekennzeichnet, dass**
einer des ersten Teilabschnittes (116) und des zweiten Teilabschnittes (118) ein gegenüber einer Schraubenachse abgeschrägter Abschnitt ist **und der andere von dem ersten Teilabschnitt (116) und dem zweiten Teilabschnitt (118) ein gegenüber der Schraubenachse achsparalleler Abschnitt ist.**

10. Verfahren gemäß Anspruch 9, wobei die Schraube (100) mittels Drehbetätigens eines Antriebs (124) an dem Schraubenkopf (106) angetrieben wird; oder
wobei die Schraube (100) mittels Ausübens einer rein axialen Setzkraft auf den Schraubenkopf (106) angetrieben wird, insbesondere eingenagelt oder eingeschossen wird.

11. Verfahren zum Herstellen einer Schraube (100) zum Einbringen in einen Untergrund, wobei das Verfahren aufweist:
Ausbilden eines sich axial erstreckenden Schaftabschnitts (102);
Ausbilden eines Gewindes (104) an dem Schaftabschnitt (102), das mit sich ausgehend von dem Schaftabschnitt (102) radial erstreckenden Gewindegängen (110) versehen wird;
Ausbilden einer Diskontinuität (114) an dem Schaftabschnitt (102) an einem Zwischengewindeabschnitt (112) zwischen benachbarten Gewindegängen (110);
wobei genau zwei Teilabschnitte (116, 118) in dem Zwischengewindeabschnitt (112) bereitgestellt sind und die Diskontinuität (114) zwischen den beiden Teilabschnitten (116, 118) vorgesehen ist,
**dadurch gekennzeichnet, dass**
einer des ersten Teilabschnittes (116) und des zweiten Teilabschnittes (118) ein gegenüber einer Schraubenachse abgeschrägter Abschnitt ist **und der andere von dem ersten Teilabschnitt (116) und dem zweiten Teilabschnitt (118) ein gegenüber der Schraubenachse achsparalleler Abschnitt ist.**

12. Verfahren gemäß Anspruch 11, wobei die Zwischengewindeabschnitte (112) mit der Diskontinuität (114) zumindest teilweise bei einem Walzen des Gewindes (104) ausgebildet werden.

13. Verwendung einer Schraube (100) gemäß einem der Ansprüche 1 bis 8 zum insbesondere vorbohrungsfreien Einbringen in einen Holzuntergrund, insbesondere in einen Massivholzuntergrund.

## Claims

1. Screw (100), having:
an axially extending shaft section (102);
a screw thread (104) on the shaft section (102), which has thread turns (110) extending radially from the shaft section (102);
wherein the shaft section (102) has a discontinuity (114) on an intermediate threaded section (112) between adjacent thread turns (110);
wherein exactly two partial sections (116, 118) are provided in the intermediate threaded section (112) and the discontinuity (114) is provided between the two partial sections (116, 118),
**characterized in that**
one of the first partial section (116) and the second partial section (118) is a portion that is tapered with respect to a screw axis and the other one of the first partial section (116) and the second partial section (118) is a portion that is axially parallel with respect to the screw axis.

2. Screw (100) according to claim 1, wherein the discontinuity (114) at the intermediate threaded section (112) is formed as a step.

3. Screw (100) according to any one of the claims 1 and 2, wherein the intermediate threaded section (112) at the step has a transition surface extending substantially perpendicular to a screw axis (120).

4. Screw (100) according to any one of the claims 1 to 3, having at least one of the following features:
wherein a respective intermediate threaded section (112) with a respective discontinuity (114) is formed on the shaft section (102) between more than half, preferably between more than 75%, more preferably between more than 90%, and most preferably between all adjacent thread turns (110);
wherein the intermediate threaded sections (112) with the discontinuity (114) deviate with respect to a screw axis (120) in such a way that an additional material (200) adjoining a respective rear-side thread turn (110h) is compensated by a missing material (202) adjoining the respective front-side thread turn (110v);
wherein the intermediate threaded sections (112) with the discontinuity (114) deviate with respect to a screw axis (120) in such a way that the discontinuity (114) at the respective intermediate threaded section (112) intersects a mass-equivalent circular cylinder core in the middle between a respective rear-side thread turn (110h) and a respective front-side thread turn (110v).

5. Screw (100) according to any one of the claims 1 to 4, embodied as a wood screw (100) for inserting, in particular without drilling a pilot hole, into a wooden underground, in particular into a solid wooden underground.

6. Screw (100) according to any one of the claims 1 to 5, further having:
a screw head (106) connected directly or indirectly to the shaft section (102) at the rear side; and/or
the screw tip (108) connected directly or indirectly to the shaft section (102) at the front side for penetrating into the underground.

7. Screw (100) according to claim 6, having at least one of the following features:
wherein the screw tip (108) is formed as a punctiform end (122), wherein the thread (104) extends from the punctiform end (122) along at least a part of the shaft section (102);
wherein the screw tip (108) is formed as a drill tip, in particular with at least a cutting edge at the end side;
wherein the screw head (106) is provided with a drive (124) for rotationally driving the screw (100), wherein the drive (124) is embodied in particular as a longitudinal slot, as a cross slot, as an Allen head, as a TORX drive or as an AW drive.

8. Screw (100) according to any one of the claims 1 to 7, having at least one of the following features:
wherein the discontinuity (114) is axially spaced apart from both thread turns (110) that axially delimit the associated intermediate thread section (112), in particular is arranged axially in the middle between both thread turns (110) that axially delimit the associated intermediate thread section (112);
wherein the discontinuity (114) runs completely around a screw axis (120), in particular runs helically around the screw axis (120) parallel to the thread turns (110).

9. A method of inserting a screw (100) into an underground, the method having:
putting on, in particular putting on without drilling a pilot hole, a screw tip (108) at a front end of the screw (100) to the underground;
driving the screw (100) by actuating a screw head (106) at a rear-side end of the screw (100) for exerting a setting force on the screw (100) in such a way that the screw tip (108) penetrates into the underground and a screw thread (104) on an axially extending shaft section (102) of the screw (100) cuts, in particular in a self-cutting manner, a counter thread in the underground between the screw tip (108) and the screw head (106), wherein an intermediate threaded section (112) with a discontinuity (114) is formed on the shaft section (102) between adjacent thread turns (110) extending radially from the shaft section (102), into the surrounding region of which discontinuity material is displaced during the axially penetrating of the screw (100) into the underground;
wherein exactly two partial sections (116, 118) are provided in the intermediate threaded section (112) and the discontinuity (114) is provided between the two partial sections (116, 118),
**characterized in that**
one of the first partial section (116) and the second partial section (118) is a portion that is tapered with respect to a screw axis and the other one of the first partial section (116) and the second partial section (118) is a portion that is axially parallel with respect to the screw axis.

10. Method according to claim 9, wherein the screw (100) is driven by rotationally operating a drive (124) at the screw head (106); or
wherein the screw (100) is driven, in particular nailed or shot in, by exerting a purely axial setting force on the screw head (106).

11. Method for producing a screw (100) for inserting into an underground, the method having:
forming an axially extending shaft section (102);
forming a screw thread (104) on the shaft section (102), which screw thread is provided with thread turns (110) extending radially from the shaft section (102);
forming a discontinuity (114) on the shaft section (102) at an intermediate threaded section (112) between adjacent thread turns (110);
wherein exactly two partial sections (116, 118) are provided in the intermediate threaded section (112) and the discontinuity (114) is provided between the two partial sections (116, 118),
**characterized in that**
one of the first partial section (116) and the second partial section (118) is a portion that is tapered with respect to a screw axis and the other one of the first partial section (116) and the second partial section (118) is a portion that is axially parallel with respect to the screw axis.

12. Method according to claim 11, wherein the intermediate threaded sections (112) with the discontinuity (114) are formed at least partially during a rolling of the screw thread (104).

13. Use of a screw (100) according to any one of the claims 1 to 8 for inserting into a wooden underground, in particular into a solid wooden underground, in particular without drilling a pilot hole.

## Revendications

1. Vis (100) présentant :
une section de tige (102) s'étendant axialement ;
un filet (104) au niveau de la section de tige (102) qui présente des pas (110) s'étendant radialement à partir de la section de tige (102) ;
dans laquelle la section de tige (102) présente au niveau d'une section de filetage intermédiaire (112) entre des pas (110) contigus une discontinuité (114) ;
dans lequel précisément deux sections partielles (116, 118) sont mises à disposition dans la section de filetage intermédiaire (112) et la discontinuité (114) est prévue entre les deux sections partielles (116, 118),
**caractérisée en ce que**
une de la première section partielle (116) et de la seconde section partielle (118) est une section biseautée par rapport à un axe de vis et l'autre de la première section partielle (116) et de la seconde section partielle (118) est une section parallèle par rapport à l'axe de vis.

2. Vis (100) selon la revendication 1, **caractérisée en ce que** la discontinuité (114) est réalisée au niveau de la section de filetage intermédiaire (112) comme gradin.

3. Vis (100) selon l'une des revendications 1 et 2, **caractérisée en ce que** la section de filetage intermédiaire (112) présente sur le gradin une surface de transition s'étendant sensiblement perpendiculairement à un axe de vis (120).

4. Vis (100) selon l'une des revendications 1 à 3, présentant au moins une des caractéristiques suivantes :
**caractérisée en ce qu'**au niveau de la section de tige (102) entre plus de la moitié, de préférence entre plus de 75 %, de manière encore préférée entre plus de 90 %, et de manière préférée entre toutes entre tous les pas contigus (110) une section de filetage intermédiaire (112) respective est réalisée avec une discontinuité respective (114) ;
dans laquelle les sections de filetage intermédiaires (112) avec la discontinuité (114) divergent par rapport à un axe de vis (120) de telle manière qu'un matériau supplémentaire (200) contigu à un pas (110h) côté arrière respectivement soit compensé par un mauvais matériau (202) contigu au pas (110v) côté avant respectivement ;
dans laquelle les sections de filetage intermédiaires (112) avec la discontinuité (114) divergent par rapport à un axe de vis (120) de telle manière que la discontinuité (114) coupe au niveau de la section de filetage intermédiaire (112) respective un noyau de cylindre circulaire de masse équivalente au milieu entre un pas (110h) côté arrière respectif et un pas (110v) côté avant respectif.

5. Vis (100) selon l'une des revendications 1 à 4, réalisée comme vis à bois (100) pour l'introduction, en particulier sans préperçage, dans un support en bois, en particulier dans un support en bois massif.

6. Vis (100) selon l'une des revendications 1 à 5, présentant de plus :
une tête de vis (106) raccordée à la section de tige (102) côté arrière directement ou indirectement ; et/ou
la pointe de vis (108) raccordée à la section de tige (102) côté avant directement ou indirectement pour la pénétration dans le support.

7. Vis (100) selon la revendication 6, présentant au moins une des caractéristiques suivantes :
**caractérisée en ce que** la pointe de vis (108) est formée comme une extrémité (122) ponctuelle, dans laquelle le filet (104) s'étend à partir de l'extrémité (122) ponctuelle le long d'au moins une partie de la section de tige (102) ;
dans laquelle la pointe de vis (108) est réalisée comme pointe de forage, en particulier avec au moins une arête de coupe côté extrémité ;
dans laquelle la tête de vis (106) est pourvue d'un entraînement (124) pour l'entraînement rotatif de la vis (100), dans laquelle l'entraînement (124) est réalisé en particulier comme fente longitudinale, comme fente en croix, comme imbus, comme entraînement Torx ou comme entraînement AW.

8. Vis (100) selon l'une des revendications 1 à 7, présentant au moins une des caractéristiques suivantes :
**caractérisée en ce que** la discontinuité (114) est espacée axialement des deux pas (110) délimitant axialement la section de filetage intermédiaire (112) afférente, en particulier est agencée axialement au milieu entre les deux pas (110) délimitant axialement la section de filetage intermédiaire (112) afférente ;
dans laquelle la discontinuité (114) tourne sur toute la périphérie autour d'un axe de vis (120), en particulier tourne parallèlement aux pas (110) en hélice autour de l'axe de vis (120).

9. Procédé d'introduction d'une vis (100) dans un support, dans lequel le procédé présente :
l'application, en particulier l'application sans préperçage, d'une pointe de vis (108) au niveau d'une extrémité côté avant de la vis (100) sur le support ;
l'entraînement de la vis (100) au moyen de l'actionnement d'une tête de vis (106) au niveau d'une extrémité côté arrière de la vis (100) pour l'exercice d'une force de placement sur la vis (100) de telle manière que la pointe de vis (108) pénètre dans le support et un filet (104) au niveau d'une section de tige (102) s'étendant axialement de la vis (100) entre la pointe de vis (108) et la tête de vis (106), en particulier par autotaraudage, coupe un filet antagoniste dans le support, dans lequel au niveau de la section de tige (102) entre des pas (110) contigus s'étendant radialement à partir de la section de tige (102) une section de filetage intermédiaire (112) est réalisée avec une discontinuité (114), dans la zone environnante de laquelle du matériau est déplacé lors de la pénétration axiale de la vis (100) dans le support ;
dans lequel précisément deux sections partielles (116, 118) sont mises à disposition dans la section de filetage intermédiaire (112) et la discontinuité (114) est prévue entre les deux sections partielles (116, 118),
**caractérisé en ce que**
une de la première section partielle (116) et de la seconde section partielle (118) est une section biseautée par rapport à un axe de vis et l'autre de la première section partielle (116) et la seconde section partielle (118) est une section parallèle par rapport à l'axe de vis.

10. Procédé selon la revendication 9, **caractérisé en ce que** la vis (100) est entraînée au moyen de l'actionnement rotatif d'un entraînement (124) au niveau de la tête de vis (106) ; ou
dans lequel la vis (100) est entraînée, en particulier clouée ou insérée, au moyen de l'exercice d'une force de placement purement axiale sur la tête de vis (106).

11. Procédé de fabrication d'une vis (100) pour l'introduction dans un support, dans lequel le procédé présente :
la réalisation d'une section de tige (102) s'étendant axialement ;
la réalisation d'un filet (104) au niveau de la section de tige (102) qui est pourvue de pas (110) s'étendant radialement à partir de la section de tige (102) ;
la réalisation d'une discontinuité (114) au niveau de la section de tige (102) au niveau d'une section de filetage intermédiaire (112) entre des pas contigus (110) ;
dans lequel précisément deux sections partielles (116, 118) sont mises à disposition dans la section de filetage intermédiaire (112) et la discontinuité (114) est prévue entre les deux sections partielles (116, 118),
**caractérisé en ce que**
une de la première section partielle (116) et de la seconde section partielle (118) est une section biseautée par rapport à un axe de vis et l'autre de la première section partielle (116) et de la seconde section partielle (118) est une section parallèle par rapport à l'axe de vis.

12. Procédé selon la revendication 11, **caractérisé en ce que** les sections de filetage intermédiaires (112) sont réalisées avec la discontinuité (114) au moins partiellement lors d'un laminage du filet (104).

13. Utilisation d'une vis (100) selon l'une des revendications 1 à 8, pour l'introduction en particulier sans préperçage dans un support en bois, en particulier dans un support en bois massif.
